**Europäisches Patentamt**

**European Patent Office**

**Office européen des brevets**

(19)

(11) Veröffentlichungsnummer: **0 283 559 B1**

(12) # EUROPÄISCHE PATENTSCHRIFT

(45) Veröffentlichungstag der Patentschrift:
04.07.90

(51) Int. Cl.⁵: **A47J 43/14**

(21) Anmeldenummer: **87115074.4**

(22) Anmeldetag: **15.10.87**

(54) **Eierauspumpgerät.**

(30) Priorität: **21.03.87 DE 3709304**
**21.08.87 DE 3727951**

(43) Veröffentlichungstag der Anmeldung:
**28.09.88 Patentblatt 88/39**

(45) Bekanntmachung des Hinweises auf die Patenterteilung:
**04.07.90 Patentblatt 90/27**

(84) Benannte Vertragsstaaten:
**AT BE CH DE ES FR GB GR IT LI LU NL SE**

(56) Entgegenhaltungen:
**DE-C- 73 671**
**DE-U- 8 325 001**
**US-A- 3 855 915**
**US-A- 4 182 234**

**Die Akte enthält technische Angaben, die nach dem Eingang der Anmeldung eingereicht wurden und die nicht in dieser Patentschrift enthalten sind.**

(73) Patentinhaber: **Firma Johannes Zemlin Inhaber Peter Hoffmann, Kronsaalsweg 70, D-2000 Hamburg 54(DE)**

(72) Erfinder: **Carstens, Jan, Gärtnerstrasse 36, D-2083 Halstenbek(DE)**

(74) Vertreter: **Hoffmann, Jürgen Tobias, Neubertstr. 51, D-2000 Hamburg 76(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Eierauspumpgerät, mit dem auf einfache und hygienische Weise flüssige Eimasse aus dem Eigehäuse herausgepreßt werden kann und hernach das Gehäuse in hygienisch und optisch einwandfreier Form, insbesondere zu Schmuck- und Zierzwecken, zur Verfügung steht.

Erfahrungsgemäß bereitet die Herausnahme des Ei-Inneren aus dem Eigehäuse, das gleichzeitig in seiner Form zu verschiedenen Zwecken unversehrt bleiben soll, größte Schwierigkeiten. Dies gilt auch in hygienischer Hinsicht, soweit Eimasse wie auch Eigehäuse eine Weiterverwendung finden, da zum einen die Eimasse Lebensmittel ist und zum anderen bei Verwendung des Eigehäuses zu Schmuck- und Zierzwecken etwaig verbliebene Flüssigkeitsreste dem Befall von Ungeziefer oder ähnlichem ausgesetzt sind. Bei einer Verwendung des Eigehäuses zu Schmuck- und Zierzwecken ist weiter von entscheidendem Vorteil, wenn die zur Entleerung notwendige Beschädigung des Eigehäuses so gering wie möglich gehalten werden kann.

Es ist bekannt, daß zum Entleeren eines Eies mechanische Hilfsvorrichtungen verwendet werden. So ersetzt eine Ausführung nach DE-C 73 706 und US-A 3 855 915 menschliche Atemluft durch eine Druckluftpumpe, mittels derernachdem das Ei mit zwei Löchern versehen wurde – die Druckluft entweicht.

Es ist weiter bekannt, das Einbringen einer Kanüle in das Ei-Innere, um dann mit Hilfe einer Saugvorrichtung die Eiflüssigkeit in das Sauggerät zu befördern (DE-U-8 325 001).

Ferner ist eine Vorrichtung bekannt, bei der die durch Druckluft herausgepreßte Eimasse von einem Entsorgungsrohr aufgenommen wird (US-A 4 182 234).

Bei diesen bekannten Vorrichtungen ist es allerdings nötig, entweder ein Loch in die Eihülle zu verbringen, dessen Mindestdurchmesser eine nachträgliche Vierwendung der Eihülle zu Schmuck- und Zierzwecken ausschließt, oder notwendig, mehr als eine Bohrung in das Eigehäuse zu verbringen, wobei für den Anwender unklar bleibt, wie und in welcher Größe dies geschehen soll oder aber, daß die Eiflüssigkeit in das Sauggerät gelangt, wodurch ein erheblicher Mehraufwand hinsichtlich der Säuberung der mechanischen Einrichtgung entsteht.

Der Erfindung liegt die Aufgabe zugrunde, ein leicht zu handhabendes Haushaltsgerät zu entwickeln, das bei einfachster Handhabung ein Entleeren des Eies durch nur eine leicht am Ei anzubringende Bohrung von bestimmtem Durchmesser gewährleistet.

Diese Aufgabe wird erfindungsmäßig mit einem Eierauspumpgerät gelöst, das die im Patenantanspruch 1 angegebenen Merkmale aufweist.

Weitere zweckmäßige Ausgestaltungen der Erfindung sind Gegenstand der abhängigen Ansprüche 2–7.

Die mit der Erfindung erzielten Vorteile bestehen insbesondere darin, daß nicht nur Eimasse, sondern auch Eigehäuse in hygienisch einwandfreier Form zur Weiterverwendung zur Verfügung steht. Weiter, daß bei einer Verwendung des Eigehäuses zu Schmuck- und Zierzwecken ein den optischen Gesamteindruck beeinträchtigendes Loch bzw. das bei herkömmlichem Auspusten mit dem Mund oder anderen mechanischen Vorrichtungen notwendig werdende, ebenfalls den optischen Gesamteindruck beeinträchtigende, zweite Loch im Eigehäuse vermieden wird.

Hinsicht der Ansprüche 5, 6 und 7 bestehen die mit der Erneuerung erzielten Vorteile insbesondere darin, daß die Eimasse in einem Auffangbehälter aufgenommen wird, wobei während der Bedienung weder Auffangbehälter, noch Ei freihändig gehalten werden müssen. Die Handhabung des Gerätes ist außerordentlich einfach.

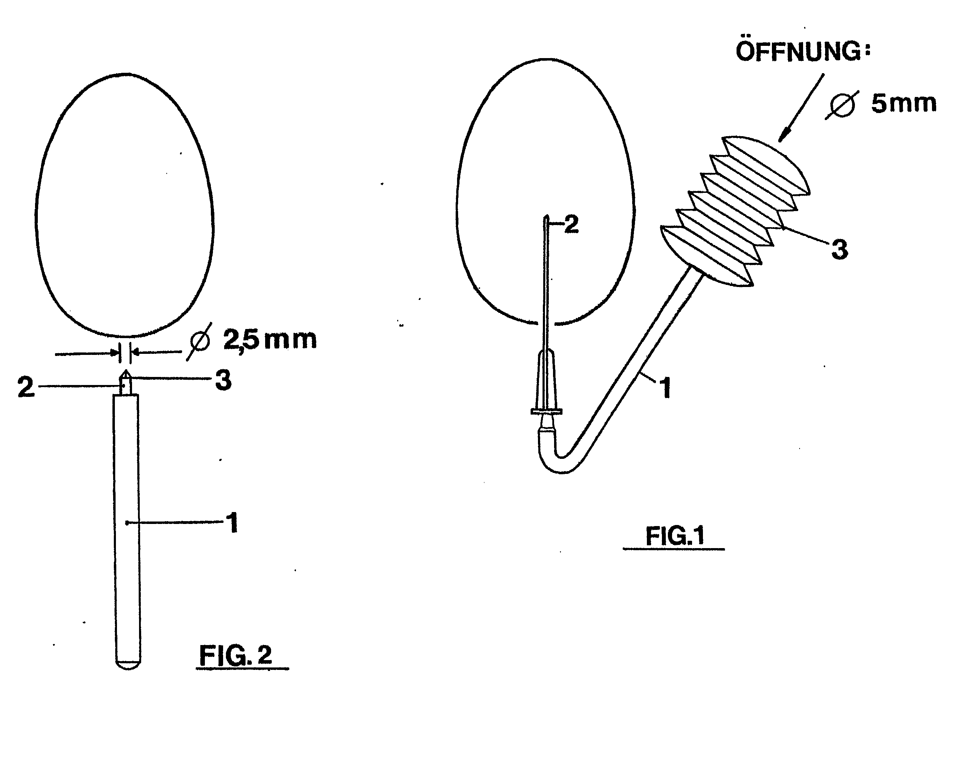

Ein Ausführungsbeispiel nach Anspruch 1 der Erfindung ist in der Zeichnung als Figur 1 und Figur 2 dargestellt und wird im folgenden näher beschrieben:

Das Eierauspumpgerät weist eine Handpumpe und einen Handbohrer auf. Die Handpumpe (Figur 1) besteht aus einem in v-Form gebogenen Kunststoffrohr, an dessen einem Ende eine Metallkanüle (Durchmesser 1 mm) und an dessen anderem Ende ein runder Faltenbalg aus Kunststoff (Durchmesser 30–35 mm) angebracht ist, dessen Oberseite eine ca. 5 mm große Öffnung aufweist.

Der Handbohrer (Figur 2) besteht aus einem ca. 7 cm langen zylindrischen Körper (Material: Kunststoff oder Holz, ca. 0,5 cm Durchmesser), dessen Metallspitze (Durchmesser ca. 2,5 mm) pyramidenförmig, 4- bis 8-seitig stumpf zugeschliffen ist. Der Schliff weist die Besonderheit auf, daß der Winkel in der Spitze zwischen 80° und 120° liegt. Dadurch ist gewährleistet, daß die zu bohrenden Löcher kreisförmig durch einfaches Drehen des zylindrischen Körpers mit einem Durchmesser von ca. 2,5 mm gebohrt werden können.

Der Faltenbalg hat die Funktion einer Pumpe. Er befindet sich bei ausgedehntem Zustand in Ruhe.

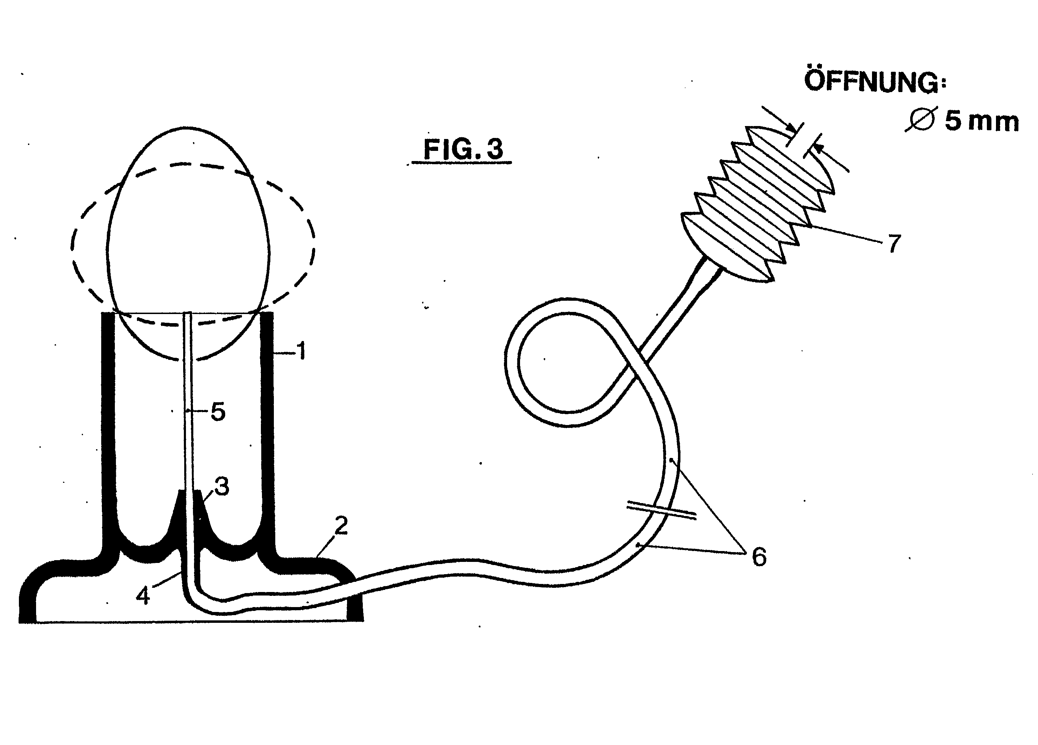

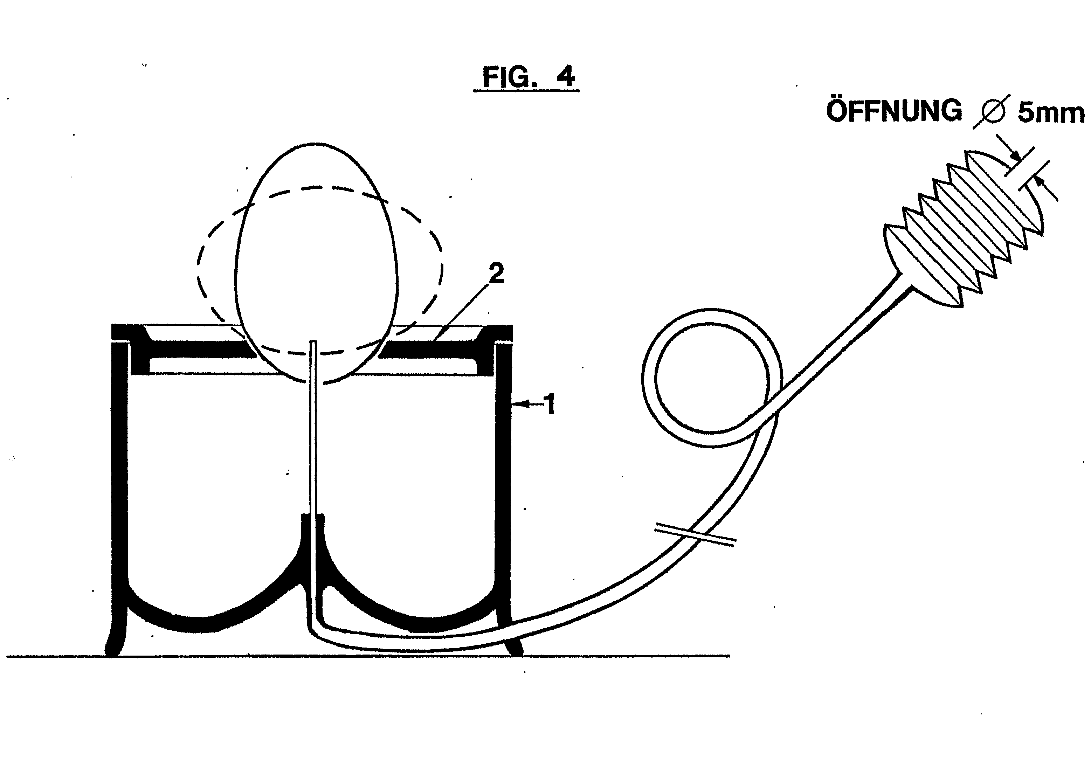

Weitere Ausgestaltungen zeigen die Figur 3 und die Figur 4, wobei der an der nach unten weisenden Aufformung angeflanschte flexible Schlauch aus Kunststoff oder Gummi besteht, eine Länge von ca. 200 mm bis 250 mm und einen Querschnitt von 3 mm bis 6 mm aufweist und der Faltenbalg aus Kunststoff oder Gummi besteht.

Das beschriebene Eierauspumpgerät wird in folgender Weise gehandhabt:

Zunächst wird an einer beliebigen Stelle des Eigehäuses mittels Bohrer die Bohrung eingebracht. Sodann wird die Metallkanüle des Pumpgerätes durch das Loch in das Gehäuse eingeführt, was entsprechend bei den Ausführungen nach Figur 4 und 5 durch Auflegen des Eies auf die Öffnung des Gefäßes bzw. auf die Ausnehmung des Gefäßdeckels erfolgt. Sodann wird der Faltenbalg zusammengedrückt, wobei das Loch an der Oberseite durch das Aufsetzen des Daumens zu schließen ist. Die dadurch unter Druck in das Eigehäuse eingebrachte Luft bedingt das Abfließen der flüssigen Eimasse durch die Bohrung an der Kanüle vorbei.

Durch die verhältnismäßig kleine Öffnung der Kanüle kann die flüssige Eimasse einfacher durch das ca. 2,5 mm große Loch entweichen, als durch die sehr viel kleinere Öffnung der Kanüle.

## Patentansprüche

1. Eierauspumpgerät zur hygienisch einwandfreien Entfernung der flüssigen Eimasse aus dem Eigehäuse, bestehend aus zwei Elementen
a) einer Handpumpe (Figur 1), die ein in v-Form gebogenes Rohr (Figur 1; 1) aufweist, an dessen einem Ende eine Metallkanüle (Figur 1; 2) und an dessen anderem Ende ein runder Faltenbalg (Figur 1; 3) aus Kunststoff oder Gummi angebracht ist, wobei die Oberseite des Faltenbalgs mit einer Öffnung versehen ist und
b) einem Handbohrer (Figur 2), der einen zylindrischen Körper von ca. 0,5 cm Durchmesser (Figur 2; 1) mit einer pyramidenförmig stumpf zugeschliffenen (Figur 2; 3) Metallspitze (Figur 2; 2) wobei der Durchmesser der Metallspitze (Figur 2; 2) des Handbohrers gegenüber dem Durchmesser der Metallkanüle (Figur 1; 2) 1,5 bis 3 mm größer ist.
2. Eierauspumpgerät nach Anspruch 1, dadurch gekennzeichnet, daß der Handbohrer etwa 70 mm lang ist, die Pyramide 4–8-seitig ausgebildet ist und der spitze Winkel 80° bis 120° beträgt.
3. Eierauspumpgerät nach Anspruch 1, dadurch gekennzeichnet, daß die Metallspitze des Handbohrers kegelförmig zugeschliffen ist und mit mineralischen Schleifkörnern besetzt ist.
4. Eierauspumpgerät nach Anspruch 1, 2 oder 3, dadurch gekennzeichnet, daß das v-förmig gebogene Rohr der Handpumpe aus Kunststoff oder Metall besteht.
5. Eierauspumpgerät nach Anspruch 1, 2, 3 oder 4, dadurch gekennzeichnet, daß die Handpumpe (Figur 3) ein aus Kunststoff, Metall, Glas oder Keramik gefertigtes zylindrisches Gefäß (Figur 3; 1) mit Standfuß (Figur 3; 2) und einer runden Öffnung mit einem lichten Durchmesser von ca. 36 mm bis 42 mm aufweist, an dessen Bodenmitte sich zwei kegelförmige Aufformungen mit einer senkrecht durchlaufenden Bohrung befinden, wobei eine der Aufformungen zur Gefäßöffnung weist (Figur 3; 3) und die andere entgegengesetzt an der Unterseite des Bodens angeordnet ist (Figur 3; 4), wobei in die in das Gefäßinnere ragende Aufformung eine, mit der Spitze bündig mit der Gefäßoberkante abschließende Metall- oder Kunststoffkanüle (Figur 3; 5) in die Bohrung eingelassen ist und an der Spitze der nach unten weisenden Aufformung ein ca. 200 mm–250 mm langer, ca. 3 mm bis 6 mm im Querschnitt messender, flexibler Schlauch aus Kunststoff oder Gummi (Figur 3; 6) angeflanscht ist, an dessen anderem Ende der runde Faltenbalg aus Kunststoff oder Gummi (Figur 3; 7) angebracht ist.
6. Eierauspumpgerät nach Anspruch 5, dadurch gekennzeichnet, daß der Durchmesser des Gefäßes (Figur 4; 1) größer als 36 mm bis 42 mm und mit einem Deckel (Figur 4; 2) versehen ist, der in seiner Mitte eine kreisförmige Ausnehmung mit einem Durchmesser von 36 mm bis 42 mm aufweist.
7. Eierauspumpgerät nach Anspruch 1, 2, 3, 4, 5 oder 6, dadurch gekennzeichnet, daß der Durchmesser der Metallspitze des Handbohrers gegenüber dem Durchmesser der Kanüle 2 mm–3 mm größer ist.

## Claims

1. Pumping-out device for eggs for the purpose of emptying fluid egg mass from eggshells hygienically, consisting of two elements:
a) A hand pump (Figure 1) featuring a V-shaped tube (Figure 1; 1) with a metal cannula (Figure 1; 2) at one end and a round bellows (Figure 1; 3) made of plastic or rubber attached to the other end, whereby there is an opening at the top of bellows.
b) A hand drill (Figure 2) featuring a cylindrical body with a diameter of approx. 0.5 cm (Figure 2; 1) and a metal tip (Figure 2; 3) cut as a truncated four-to-eight-sided pyramid (Figure 2; 2), whereby the diameter of the metal tip (Figure 2; 2) of the hand drill is 1.5 mm–3 mm larger than the diameter of the metal cannula (Figure 1; 2).
2. Pumping-out device for eggs in accordance with Claim 1, characterised by the fact that the hand drill is approx. 70 mm long, the pyramid tip has four to eight sides and the angle is between 80° and 120°.
3. Pumping-out device for eggs in accordance with Claim 1, characterised by the fact that the metal tip of the hand drill is cut as a cone and is coated with mineral abrasive grains.
4. Pumping-out device for eggs in accordance with Claims 1, 2 or 3, characterised by the fact that the V-shaped tube of the hand pump is made of plastic or metal.
5. Pumping-out device for eggs in accordance with Claims 1, 2, 3 or 4 characterised by the fact that the hand pump (Figure 3) is a cylindrical vessel (Figure 3; 1) made of plastic, metal, glass or ceramic with a stand (Figure 3; 2) and featuring a round opening with an inside diameter of approx. 36 mm–42 mm. At the bottom centre of this vessel there are two conical chambers separated by a vertical hole, whereby one of the conical chambers points to the vessel opening (Figure 3; 3) and the other to the bottom of the vessel (Figure 3; 4). The conical chamber projecting inside the vessel has a metal or plastic cannula (Figure 3; 5) inserted in the drilled hole with which it is flush-mounted. The other conical chamber facing downward has a flange-mounted approx. 200 mm–250 mm long flexible tube with a diameter of 3 mm to 6 mm made of plastic or rubber (Figure 3; 6). A round bellows made of plastic or rubber (Figure 3; 7) is attached to the other end.
6. Pumping-out device for eggs in accordance with Claim 5, characterised by the fact that the diameter of the vessel (Figure 4; 1) is larger than 36 mm–42 mm and features a lid (Figure 4; 2) with a circular depression in the middle the diameter of which is 36 mm–42 mm.
7. Pumping-out device for eggs in accordance with Claims 1, 2, 3, 4, 5 or 6, characterised by the fact that the diameter of the metal tip of the hand drill is 2 mm–3 mm larger than the diameter of the cannula.

## Revendications

1. Appareil à vider les œufs pour extraire le liquide se trouvant à l'intérieur de la coquille de façon parfaitement hygiènique, composé de deux éléments:

a) une pompe à main (figure 1), pourvue d'un tuyau en forme de v (figure 1;1), présentant à une extrémité une canule en métal (figure 1; 2), à l'autre extrémité un soufflet rond en plastique ou en caoutchouc (figure 1; 3), la partie supérieure du soufflet étant elle-même munie d'une ouverture.

b) une vrille (figure 2) pouvant être décrite de la façon suivante: un corps cylindrique d'un diamètre d'environ 0,5 cm (figure 2; 1), pourvu d'une pointe en métal (figure 2; 2) pyramidale, tronquée (figure 2; 3), le diamètre de la pointe en métal (figure 2; 2) de la vrille étant 1,5 à 3 mm plus grand que celui de la canule en métal (figure 1; 2).

2. L'appareil à vider les œufs, conformément à la revendication 1, est caractérisé par la vrille d'une longueur de 70 mm environ, par la pyramide de 4 à 8 côtés et par l'angle aigu de 80° à 120°.

3. L'appareil à vider les œufs, conformément à la revendication 1, est caractérisé par le fait que la pointe en métal de la vrille est polie en forme de cône et garnie de grains abrasifs minéraux.

4. L'appareil à vider les œufs, conformément aux revendications 1, 2 ou 3, est caractérisé par le fait que le tuyau en forme de v de la pompe à main est en plastique ou en métal.

5. L'appareil à vider les œufs, conformément aux revendications 1, 2, 3 ou 4, est caractérisé par le fait que la pompe à main (figure 3) est pourvue d'un récipient cylindrique en plastique, métal, verre ou céramique (figure 3;1), avec un pied (figure 3; 2), et une ouverture ronde d'un diamètre intérieure de 36 à 42 mm environ; au fond du récipient se trouvent deux élévations coniques pourvues d'un trou passant verticalement, une des ces élévations se trouvant en direction de l'ouverture du récipient (figure 3; 3), l'autre étant dirigée de l'autre côté, dans la partie inférieure du fond du récipient (figure 3; 4). Dans l'élévation dirigée vers le haut à l'intérieur du récipient se trouve une canule en métal ou en plastique (figure 3; 5) dont la pointe est à la même hauteur que le bord supérieur du récipient. Un tuyau en plastique ou en caoutchouc d'une longueur de 200 à 250 mm, avec une coupe transversale mesurant 3 à 6 mm (figure 3; 6) est bridée à la pointe de l'élévation dirigée vers le bas; à l'autre bout de celui-ci se trouve le soufflet rond en plastique ou en caoutchouc (figure 3; 7).

6. L'appareil à vider les œufs, conformément à la revendication 5, est caractérisé par le fait que le diamètre du récipient (figure 4; 1) est supérieur à 36–42 mm et pourvu d'un couvercle (figure 4; 2) présentant en son milieu une ouverture circulaire d'un diamètre de 36 à 42 mm.

7. L'appareil à vider les œufs, conformément aux revendications 1, 2, 3, 4, 5, ou 6, est caractérisé par le fait que le diamètre de la pointe en métal de la vrille est 2 à 3 mm plus grand que celui de la canule.

ÖFFNUNG:

∅ 5mm

3

2

1

**FIG.1**

∅ 2,5mm

2

3

1

**FIG. 2**

EP 0 283 559 B1

EP 0 283 559 B1

**FIG. 3**

ÖFFNUNG:
Ø 5 mm

# FIG. 4

ÖFFNUNG Ø 5mm

2

1

EP 0 283 559 B1